# EUROPÄISCHE PATENTSCHRIFT

(11) **EP 3 613 321 B1**
(45) Veröffentlichungstag und Bekanntmachung des Hinweises auf die Patenterteilung: **28.04.2021**
(21) Anmeldenummer: 19189597.8
(22) Anmeldetag: 01.08.2019
(51) Int. Cl.: A47L 9/00, A47L 9/28

(54) **SICH SELBSTTÄTIG INNERHALB EINER UMGEBUNG FORTBEWEGENDES BODENBEARBEITUNGSGERÄT**
FLOOR PROCESSING APPARATUS WHICH MOVES INDEPENDENTLY WITHIN AN ENVIRONMENT
APPAREIL DE TRAITEMENT DU SOL SE DÉPLAÇANT DE MANIÈRE AUTONOME DANS UN ENVIRONNEMENT

(30) Priorität: 23.08.2018 DE 102018120577
(43) Veröffentlichungstag der Anmeldung: 26.02.2020
(73) Patentinhaber: Vorwerk & Co. Interholding GmbH, 42275 Wuppertal (DE)
(72) Erfinder: Arnold, Hans-Peter, 58566 Kierspe (DE); Büning, Thomas, 44795 Bochum (DE); Fleczok, Benjamin, 45144 Essen (DE); Frielinghaus, Robert, 44803 Bochum (DE); Helmich, Martin, 47055 Duisburg (DE); Hillen, Lorenz, 42287 Wuppertal (DE); Holz, Christian, 44137 Dortmund (DE); Isenberg, Gerhard, 50668 Köln (DE); Mosebach, Andrej, 44809 Bochum (DE); Ortmann, Roman, 47057 Duisburg (DE); Schmitz, Kevin, 40599 Düsseldorf (DE); Vitz, Fabian, 42327 Wuppertal (DE); van Teeffelen, Niklas, 40223 Düsseldorf (DE); Kemker, Uwe, 42105 Wuppertal (DE)
(74) Vertreter: Müller, Enno

(56) Entgegenhaltungen:
- EP-A2- 1 963 941
- DE-A1- 10 242 257
- US-A1- 2017 329 347
- US-A1- 2018 074 508

## Beschreibung

### Gebiet der Technik

Die Erfindung betrifft ein sich selbsttätig innerhalb einer Umgebung fortbewegendes Bodenbearbeitungsgerät mit einer Antriebseinrichtung zur Fortbewegung des Bodenbearbeitungsgerätes in der Umgebung, einer Bodenbearbeitungseinrichtung zum Ausführen einer Bodenbearbeitung, einer Hindernisdetektionseinrichtung zur Detektion von Hindernissen in der Umgebung, einer Steuereinrichtung zum selbsttätigen Navigieren und Selbstlokalisieren des Bodenbearbeitungsgerätes und einer Detektionseinrichtung zur Detektion von Geräteparametern und/oder Umgebungsparametern, wobei die Steuereinrichtung eingerichtet ist, anhand der detektierten Parameter einen Fehler des Bodenbearbeitungsgerätes zu ermitteln, welcher eine Fortbewegung des Bodenbearbeitungsgerätes und/ oder eine Bearbeitung einer zu bearbeitenden Fläche durch das Bodenbearbeitungsgerät derart verhindert, dass sich das Bodenbearbeitungsgerät nicht selbsttätig aus der Fehlersituation befreien kann.

Des Weiteren betrifft die Erfindung ein Verfahren zum Betrieb eines sich selbsttätig innerhalb einer Umgebung fortbewegenden Bodenbearbeitungsgerätes, wobei sich das Bodenbearbeitungsgerät mittels einer Antriebseinrichtung in der Umgebung fortbewegt, wobei eine Bodenbearbeitung mittels einer Bodenbearbeitungseinrichtung ausgeführt wird, wobei eine Hindernisdetektionseinrichtung Hindernisse in der Umgebung detektiert, wobei das Bodenbearbeitungsgerät mittels einer Steuereinrichtung selbsttätig in der Umgebung navigiert und sich selbst lokalisiert, und wobei eine Detektionseinrichtung Geräteparameter und/oder Umgebungsparameter detektiert, und wobei die Steuereinrichtung anhand der detektieren Parameter einen Fehler des Bodenbearbeitungsgerätes ermittelt, welcher eine Fortbewegung des Bodenbearbeitungsgerätes und/oder eine Bearbeitung einer zu bearbeitenden Fläche durch das Bodenbearbeitungsgerät derart verhindert, dass sich das Bodenbearbeitungsgerät nicht selbsttätig aus der Fehlersituation befreien kann.

### Stand der Technik

Bodenbearbeitungsgeräte der vorgenannten Art sind im Stand der Technik in einer Vielzahl von unterschiedlichen Ausführungen bekannt. Es kann sich bei den Bodenbearbeitungsgeräten beispielsweise um Reinigungsgeräte, Poliergeräte, Rasenmähgeräte oder andere handeln. Insbesondere kann das sich selbsttätig fortbewegende Bodenbearbeitungsgerät in Form eines mobilen Saug- und/oder Wischroboters ausgebildet sein.

Die Veröffentlichungen DE 10 2011 000 536 A1 und DE 10 2008 014 912 A1 offenbaren selbsttätig verfahrbare Roboter zur Reinigung von Fußböden. Die Roboter sind mit Abstandssensoren ausgestattet, welche Abstände zu Hindernissen, wie beispielsweise Möbelstücken oder Raumbegrenzungen, messen können. Aus den gemessenen Abstandsdaten wird eine Umgebungskarte erstellt, anhand welcher eine Fortbewegungsroute geplant werden kann, die eine Kollision mit Hindernissen vermeidet. Die Abstandssensoren arbeiten bevorzugt berührungslos, beispielsweise mit Hilfe von Licht und/ oder Ultraschall. Es ist des Weiteren bekannt, den Roboter mit Mitteln zur Rundum-Abstandsmessung zu versehen, beispielsweise mit einem optischen Triangulationssystem, welches auf einer um eine Vertikalachse rotierenden Plattform oder dergleichen angeordnet ist. Die erfassten Abstandsdaten zu Hindernissen werden mittels einer Recheneinrichtung des Roboters zu einer Umgebungskarte verarbeitet und gespeichert, so dass der Roboter im Zuge eines Arbeitsbetriebs auf diese Umgebungskarte zurückgreifen kann, um sich innerhalb der Umgebung zu orientieren.

Im Stand der Technik ist es des Weiteren bekannt, beispielsweise aus der EP 2 252 190 B1, dass ein Bodenbearbeitungsroboter eine Mehrzahl von Orten innerhalb einer Umgebung speichert und an diesen eine Bodenbearbeitungstätigkeit ausführt, wobei eine Häufigkeit einer Bodenbearbeitung an jedem Ort nachverfolgt wird. Es werden Arbeitsroutinen angepasst bzw. maßgeschneidert, um alle Orte optimal bearbeiten zu können, wobei beispielsweise häufiger von Personen genutzte Orte mit einer größeren Häufigkeit bearbeitet werden als weniger genutzte Orte. Der Roboter kann einen oder mehrere Sensoren aufweisen, die seinen Ort und/oder die Position von Hindernissen erkennen. Dabei kann der Roboter beispielsweise auch ermitteln, dass er sich unter einem Möbelstück befindet, um dann ein anderes Bodenbearbeitungsmuster anzuwenden Ein Bodenreinigungsgerät gemäß dem Oberbegriff des Anspruchs 1 ist z.B. aus DE-A-10242257 bekannt.

Nachteilig bei den vorgenannten sich selbsttätig fortbewegenden Bodenbearbeitungsgeräten ist, dass diese stets auch dann erneut Orte in der Umgebung anfahren, wenn es dort in der Vergangenheit zu einem Fehlverhalten des Bodenbearbeitungsgerätes oder zu einem ungewollten Abbruch der Bodenbearbeitungstätigkeit gekommen ist. Das Bodenbearbeitungsgerät ist nicht dazu ausgelegt, derartige Situationen von vorneherein zu verhindern.

### Zusammenfassung der Erfindung

Ausgehend von dem vorgenannten Stand der Technik ist es daher Aufgabe der Erfindung, das Bodenbearbeitungsgerät so auszubilden, dass dieses bei der Navigation innerhalb der Umgebung vorausschauend agiert, um Fehlersituationen, aus welchen es sich nicht selbsttätig befreien kann und/oder welche eine weitere Bearbeitung der zu bearbeitenden Fläche verhindern, im Vorhinein zu vermeiden.

Zur Lösung der vorgenannten Aufgabe wird vorgeschlagen, dass die Steuereinrichtung des Bodenbearbeitungsgerätes eingerichtet ist, die mittels der Detektionseinrichtung detektierten Parameter zum Zwecke einer selbstlernenden Fehlervermeidung in Bezug auf wiederkehrende Muster zu analysieren, die durch eine wiederholt auftretende Kombination eines Fehlers und mindestens eines zeitlich vorausgehenden Umgebungs- und/oder Geräteparameters gekennzeichnet sind.

Das Bodenbearbeitungsgerät weist somit erfindungsgemäß eine selbstlernende Funktion zur vorausschauenden Verhinderung von Fehlersituationen auf. Dazu werden die von einer oder mehreren Detektionseinrichtungen des Bodenbearbeitungsgerätes aufgenommenen Daten, d. h. die detektierten Parameter der Umgebung und/ oder des Bodenbearbeitungsgerätes, gespeichert und/oder analysiert, um bei einem erneuten Auftreten eines gleichen Fehlerfalls eine Analyse der Situation in einer definierten Zeitspanne vor Auftreten des Fehlers durchführen zu können. Die Detektionseinrichtung ist dafür eingerichtet, aktuelle Messwerte und/oder Einstellungen von Sensoren und/ oder Aktoren des Bodenbearbeitungsgerätes zu detektieren. Die der Steuereinrichtung damit zur Verfügung stehenden Daten werden zum Zwecke der Analyse von Fehlersituationen genutzt und um eine Prognose zu erstellen, wie eine derartige Fehlersituation bei zukünftigen Bodenbearbeitungen und/ oder Fortbewegungen des Bodenbearbeitungsgerätes verhindert werden kann. Dabei können beispielsweise nicht nur einzelne Werte von Umgebungsparametern und/oder Geräteparametern analysiert werden, sondern vielmehr auch ein zeitlicher Verlauf der Parameter vor Eintreten einer Fehlersituation. Die Daten der Detektionseinrichtung werden mit Methoden der künstlichen Intelligenz auf wiederkehrende Muster hin analysiert, um künftig eine Fehlersituation vorhersagen zu können. Beispielsweise kann ein neuronales Netz trainiert werden, beispielsweise mit sogenannten "Machine-Learning"-Methoden. Nach dem Feststellen eines Fehlers durch die Fehlerdetektionseinrichtung kann eine Ursache, die zum Auftreten des Fehlers führte, bestimmt werden, indem die Sensor- und/oder Aktorwerte des Bodenbearbeitungsgerätes analysiert werden. Tritt ein Fehler zu einem späteren Zeitpunkt erneut auf, dann werden die neu aufgenommenen Daten der Detektionseinrichtung dazu verwendet, eine Fehlervorhersage zu verbessern. Insgesamt wird somit die Autonomie des Bodenbearbeitungsgerätes verbessert, da eine komplette Reinigung der Umgebung, beispielsweise einer Wohnung, gewährleistet werden kann, ohne dass eine Fehlersituation erneut auftritt. Es kann zuverlässig verhindert werden, dass das Bodenbearbeitungsgerät einen Arbeitsvorgang abbricht und durch einen manuellen Eingriff des Nutzers wieder aktiviert werden muss.

Es wird vorgeschlagen, dass die detektierten Fehler und vorausgehenden Umgebungs- und/oder Geräteparameter in Kombination mit einer Information über eine Position des Bodenbearbeitungsgerätes in der Umgebung und/oder mit einer Zeitinformation detektiert und gespeichert werden. Die detektierten Fehler und Umgebungs- und/oder Geräteparameter werden somit mit einer Orts- und/oder Zeitinformation kombiniert und abgespeichert, so dass die Steuereinrichtung berücksichtigen kann, wo und/ oder wann ein betreffender Umgebungsparameter und/oder Geräteparameter und/oder Fehler detektiert worden ist. Die Detektion der Umgebungsparameter, Geräteparameter und/ oder Fehler kann kontinuierlich oder zu definierten, insbesondere äquidistanten, Zeiten erfolgen. Ein Speicher des Bodenbearbeitungsgerätes kann eine Datenbank enthalten, insbesondere eine darin gespeicherte Tabelle, mit bestimmten Orten und Zeitpunkten zugeordneten detektierten Parametern und Fehlern. Sofern später an demselben Ort der Umgebung und/oder zu einem selben Zeitpunkt, beispielsweise bestimmten Tageszeiten, Wochentagen oder ähnlichem, ein identischer oder ähnlicher Fehler des Bodenbearbeitungsgerätes auftritt, kann überprüft werden, ob vor oder während des Auftretens des Fehlers gleiche Umgebungs- und/oder Geräteparameter des Bodenbearbeitungsgerätes vorlagen. Dadurch wird die selbstlernende Funktion des Bodenbearbeitungsgerätes weiterentwickelt und künftig das Auftreten des gleichen Fehlers verhindert.

Des Weiteren wird vorgeschlagen, dass die Steuereinrichtung eingerichtet ist, die Daten in Hinblick auf wiederkehrende Kombinationen von zeitlich vor und/oder bei einem Auftreten eines Fehlers aufgenommenen Umgebungs- und/oder Geräteparametern und nachfolgenden Fehlern zu analysieren und bei Erkennen einer wiederkehrenden Kombination diese als Referenzmuster abzuspeichern. Damit eine Kombination aus einem bestimmten Fehler und Umgebungs- und/oder Geräteparametern als Referenzmuster definiert und abgespeichert wird, muss diese Konstellation vorher schon einmal bei der Fortbewegung und/ oder Bodenbearbeitung des Bodenbearbeitungsgerätes aufgetreten sein. Die im Fehlerfall auftretenden Muster können somit bei einem wiederholten, mindestens zweimaligen, Auftreten als Referenzmuster gespeichert werden. Ein Referenzmuster enthält vorzugsweise zumindest einen detektierten Umgebungsparameter und/oder Geräteparameter und einen in Zusammenhang mit diesem Umgebungs- und/oder Geräteparameter aufgetretenen Fehler. Bei nachfolgenden Fortbewegungen und/oder Bearbeitungstätigkeiten des Bodenbearbeitungsgerätes werden die dann aktuell aufgenommenen Daten, d. h. Parameter, mit den definierten Referenzmustern verglichen und bei einer Übereinstimmung oder großen Ähnlichkeit festgestellt, dass in Kürze ein Fehler auftreten wird, wenn nicht Maßnahmen zur Vermeidung des Fehlers unternommen werden. Zusätzlich zu der Informationsverknüpfung von Umgebungs-/Geräteparameter und Fehler kann ein gespeichertes Referenzmuster noch andere Informationen enthalten, nämlich beispielsweise Angaben über einen Ort des Bodenbearbeitungsgerätes während der Detektion des jeweiligen Parameters und/oder über einen Zeitpunkt, zu welchem der Parameter detektiert wurde. Beispielsweise kann ein Referenzmuster einen Datensatz mit einer Uhrzeit, einem Aufenthaltsort des Bodenbearbeitungsgerätes in der Umgebung, einer zu dieser Zeit und an diesem Ort gemessenen Drehzahl der Antriebseinrichtung des Bodenbearbeitungsgerätes, und einem in der Situation aufgetretenen Fehler, beispielsweise dem Blockieren der Antriebseinrichtung, beinhalten. Wenn die Steuereinrichtung nun feststellt, dass sich das Bodenbearbeitungsgerät aktuell an demselben Ort in der Umgebung befindet und der gleiche Betrag des betreffenden Geräteparameters, nämlich die gleiche Höhe einer Drehzahl der Antriebseinrichtung, vorliegt, kann darauf geschlossen werden, dass in Kürze der gleiche Fehler, nämlich das Blockieren der Antriebseinrichtung, auftreten wird. Besonders bevorzugt wird der Geräteparameter dabei nicht nur zu einem einzigen Zeitpunkt detektiert, sondern vielmehr in einem zeitlichen Verlauf, d. h. beispielsweise über eine bestimmte Zeitspanne, detektiert. Dadurch kann festgestellt werden, dass sich der detektierte Geräteparameter im Laufe der Zeit, nämlich bei der Bodenbearbeitung oder Fortbewegung des Bodenbearbeitungsgerätes, in Richtung desjenigen Wertes bewegt, welcher dem Wert des Geräteparameters zum Zeitpunkt des Auftretens des Fehlers entspricht. Sofern ein Fehler wiederholt auftritt, können die neu aufgenommenen Daten dazu verwendet werden, die Vorhersage, d. h. das Referenzmuster, zu verbessern. Diese Verbesserung kann automatisch im Rahmen einer regulären Betriebstätigkeit erfolgen. Alternativ ist es auch möglich, dass der Nutzer das Bodenbearbeitungsgerät manuell in eine kritische, d. h. fehler anfällige, Situation bringt, so dass das Auftreten eines Fehlers provoziert wird und der Vorhersagealgorithmus des Bodenbearbeitungsgerätes entsprechend lernen und die Referenzmuster verbessern kann.

In diesem Sinne ist es somit vorgeschlagen, dass die Steuereinrichtung ebenfalls eingerichtet ist, während einer nachfolgenden Bodenbearbeitung und/oder Fortbewegung des Bodenbearbeitungsgerätes detektierte Parameter mit gespeicherten Referenzmustern zu vergleichen, um einen drohenden Fehler des Bodenbearbeitungsgerätes durch entsprechende Maßnahmen zu verhindern.

Des Weiteren wird vorgeschlagen, dass die Steuereinrichtung derart selbstlernend ausgebildet ist, dass bei Übereinstimmung aktuell detektierter Parameter mit einem Referenzmuster automatisch eine Betriebsänderung des Bodenbearbeitungsgerätes zur Vermeidung eines ansonsten drohenden Fehlers gesteuert wird und/oder dass eine Ausgabe einer Information über einen drohenden Fehler an einen Nutzer zur Ermöglichung eines manuellen Eingriffs gesteuert wird. Gemäß der erstgenannten Ausführung erfolgt eine Betriebsänderung des Bodenbearbeitungsgerätes zum Vermeiden des Auftretens eines gemäß den detektierten Parametern ansonsten in Kürze drohenden Fehlers automatisch durch die Steuereinrichtung des Bodenbearbeitungsgerätes. In dem zweitgenannten Fall ändert die Steuereinrichtung den Betrieb des Bodenbearbeitungsgerätes nicht selbsttätig, sondern gibt zunächst eine Information an einen Nutzer des Bodenbearbeitungsgerätes aus, beispielsweise über ein Display des Bodenbearbeitungsgerätes oder auch über ein in Kommunikationsverbindung mit dem Bodenbearbeitungsgerät stehendes externes Endgerät. Der Nutzer kann mit der ausgegebenen Information darüber informiert werden, welcher Fehler des Bodenbearbeitungsgerätes auftreten könnte und gegebenenfalls wo das Bodenbearbeitungsgerät sich derzeit befindet und/oder wie groß eine Zeitspanne bis zu einem möglichen Auftreten eines Fehlers ist. Vorzugsweise erhält der Nutzer einen Hinweis darauf, was er unternehmen kann, um den Fehler abzuwenden, d. h. welche Betriebsänderung des Bodenbearbeitungsgerätes der Nutzer zu unternehmen oder einzustellen hat. Die Auswahl und/oder Eingabe des Nutzers kann gespeichert und im wiederholten Fehlerfall genutzt werden, um den Fehler zu umgehen. Eine Eingabe des Nutzers kann beispielsweise ein manuelles Einlernen des Bodenbearbeitungsgerätes beinhalten, bei welchem der Nutzer das Bodenbearbeitungsgerät manuell bewegt oder mittels einer Fernbedienung steuert. Ebenso können Eingaben in einer auf einem Display dargestellten Umgebungskarte oder mittels Gesten und/oder Sprache erfolgen. Geräteparameter und/ oder vordefinierte Fehlervermeidungsstrategien können manuell an das Bodenbearbeitungsgerät übermittelt werden.

Es wird vorgeschlagen, dass die Detektionseinrichtung eingerichtet ist, einen oder mehrere Umgebungs- und/oder Geräteparameter zu detektieren, ausgewählt aus der Gruppe: Fortbewegungsroute des Bodenbearbeitungsgerätes, Einstellung und/oder Betriebsstatus einer Bodenbearbeitungseinrichtung und/oder der Hindernisdetektionseinrichtung, Leistungsaufnahme eines die Antriebseinrichtung und/ oder die Bodenbearbeitungseinrichtung antreibenden Elektromotors, Drehwinkel und/oder Drehgeschwindigkeit der Antriebseinrichtung, räumliche Orientierung und/oder Neigung des Bodenbearbeitungsgerätes, Umgebungstemperatur, Umgebungsfeuchtigkeit, Betriebstemperatur eines Elektromotors und/oder einer Bodenbearbeitungseinrichtung des Bodenbearbeitungsgerätes, Druck innerhalb eines Saugkanals des Bodenbearbeitungsgerätes und/ oder Umgebungsdruck. Es versteht sich von selbst, dass weitere Umgebungs- und/oder Geräteparameter detektiert werden können, wenn das Bodenbearbeitungsgerät dafür entsprechende Detektionseinrichtungen mit geeigneten Sensoren aufweist. Die Sensoren zur Detektion des Umgebungs-/ Geräteparameters können beispielsweise eine Strommesseinrichtung, einen Drehwinkelaufnehmer, Drehzahlmesser, Infrarotsensor, Ultraschallsensor, Kontaktsensor, ein Gyroskope, einen Beschleunigungssensoren, eine IMU-Einheit, eine Kamera, einen Drucksensor, einen Feuchtesensor und weitere umfassen.

Nach bevorzugten Ausführungsformen der Erfindung kann die Steuereinrichtung des Bodenbearbeitungsgerätes eingerichtet sein, einen oder mehrere Fehler zu erkennen, ausgewählt aus der Gruppe: Blockieren oder Durchdrehen der Antriebseinrichtung und/ oder Bodenbearbeitungseinrichtung, Blockieren eines Saugkanals, Abheben eines Teilbereiches des Bodenbearbeitungsgerätes von einer zu bearbeitenden Fläche, Festsetzen des Bodenbearbeitungsgerätes in der Umgebung. Die vorgenannten Fehler sind allesamt solche, die eine Situation schaffen, aus welcher sich das Bodenbearbeitungsgerät nicht selbsttätig befreien kann und/oder welche eine weitere Bearbeitung der zu bearbeitenden Fläche unmöglich macht. Hierbei handelt es sich um Fehler, welche eine zur Bodenbearbeitung notwendige Funktion des Bodenbearbeitungsgerätes dauerhaft außer Kraft setzen, wenn der entsprechende Fehler nicht beseitigt wird.

Bezogen auf die Maßnahmen zur Behebung des Fehlers wird vorgeschlagen, dass die Steuereinrichtung eingerichtet ist, eine oder mehrere Betriebsänderungen des Bodenbearbeitungsgerätes zur Vermeidung eines ansonsten drohenden Fehlers zu steuern, ausgewählt aus der Gruppe: Meiden eines bestimmten Bereiches der Umgebung, zeitliches Hinauszögern eines Eintritts in einen bestimmten Bereich der Umgebung, Rückwärtsbewegung entlang einer bisher gefahrenen Fortbewegungsroute, Ändern einer geplanten Fortbewegungsroute, Stoppen einer angetriebenen Bodenbearbeitungseinrichtung, Ändern einer Bewegungsrichtung und/oder Leistungsaufnahme einer Bodenbearbeitungseinrichtung. In dem Sinne kann dem Bodenbearbeitungsgerät beim Durchdrehen eines Rades der Antriebseinrichtung, beispielsweise die Änderung einer Fortbewegungsroute, ein kurzfristiges Rückwärtsfahren oder ähnliches erlaubt werden. In dem Fall, dass sich das Bodenbearbeitungsgerät nach einem vordefinierten Reinigungsplan und/ oder auf einer vorgegebenen Fortbewegungsroute bewegt, kann dieser bzw. diese ebenfalls geändert werden, um den Fehler zu vermeiden. Sofern die Betriebsänderung das Verlassen der vordefinierten Fortbewegungsroute enthält, kann das Bodenbearbeitungsgerät beispielsweise nach Umfahren eines fehleranfälligen Ortes innerhalb der Umgebung wieder auf die Fortbewegungsroute einschwenken. Sofern durch eine Vorhersage ein bevorstehender Fehler gemeldet wird, kann dieser auch situationsabhängig dadurch verhindert werden, dass das Bodenbearbeitungsgerät den zugehörigen Bereich der Umgebung bei einem aktuellen Bearbeitungsvorgang auslässt, d. h. gar nicht erst anfährt, dass der Bereich erst dann angefahren wird, wenn der Rest der Umgebung gereinigt wurde, dass das Bodenbearbeitungsgerät im Zusammenhang mit einer geplanten Fortbewegungsroute rückwärtsfahren darf bis der Fehler nicht mehr auftritt und/oder bis eine maximale Anzahl von Versuchen zur Bearbeitung des bestimmten Bereiches überschritten wird. Im letztgenannten Fall wird der bestimmte Bereich nicht mehr gereinigt, um die Bodenbearbeitung an anderen Bereichen fortsetzen zu können. Darüber hinaus kann als Betriebsänderung auch das Verhalten eines Aktors angepasst werden, beispielsweise der Betrieb eines Bodenbearbeitungselementes des Bodenbearbeitungsgerätes. Dies kann eine Rotationsrichtung betreffen, eine Saugleistung oder auch eine Leistungsaufnahme eines zugeordneten Antriebsmotors.

Es wird zudem vorgeschlagen, dass die Steuereinrichtung eingerichtet ist, eine Betriebsänderung des Bodenbearbeitungsgerätes zur Vermeidung eines Fehlers automatisch anhand eines Versuch-und-Irrtum-Verfahrens, eines evolutionären Versuch-und-Irrtum-Verfahrens, anhand definierter Regeln, und/ oder anhand in einer gemeinsamen Datenbank mehrerer Bodenbearbeitungsgeräte gespeicherter früherer Betriebsänderungen zu steuern. Die gefundene Vermeidungsstrategie kann wiederum für zukünftige, gleichartige Fehlerfälle des Bodenbearbeitungsgerätes gespeichert werden. Bei dem sogenannten evolutionären Versuch-und-Irrtum-Verfahren wird eine gefundene Vermeidungsstrategie auch dann gespeichert, wenn eine Reaktion aus einem vorhergehenden Durchlauf (nur) fast zu einer Vermeidung des Fehlers geführt hätte. Auch dies kann als Grundlage für zukünftige Fehlervermeidungen, insbesondere zur Definition eines Referenzmusters, herangezogen werden. Darüber hinaus können alternativ oder zusätzlich auch frühere Muster des Bodenbearbeitungsgerätes oder anderer Bodenbearbeitungsgeräte, welche in einem gemeinsamen Datenspeicher hinterlegt sind, herangezogen werden, um eine Fehlervorhersage für das Bodenbearbeitungsgerät zu treffen. Des Weiten kann auch eine regelbasierte Anpassung von Betriebsparametern des Bodenbearbeitungsgerätes erfolgen, die auf Erfahrungswerten während einer Entwicklungszeit des Bodenbearbeitungsgerätes beruhen. Beispielsweise kann dies beinhalten, dass eine Reinigungseinrichtung abgeschaltet wird, wenn die Leistungsaufnahme zu schnell ansteigt, d. h. über einem definierten Referenzwert liegt. Es kann auch vorgesehen sein, eine Empfindlichkeit der Detektionseinrichtung bzw. eines Sensors der Detektionseinrichtung kurzzeitig oder dauerhaft zu ändern, um gegebenenfalls die Ausgabe eines Alarms zu unterdrücken oder die Empfindlichkeit zu erhöhen, wobei dann gegebenenfalls ein falscher Alarm in Kauf genommen wird.

Neben dem beschriebenen Bodenbearbeitungsgerät wird mit der Erfindung auch ein Verfahren zum Betrieb eines sich selbsttätig innerhalb einer Umgebung fortbewegenden Bodenbearbeitungsgerätes vorgeschlagen, wobei sich das Bodenbearbeitungsgerät mittels einer Antriebseinrichtung in der Umgebung fortbewegt, wobei eine Bodenbearbeitung mittels einer Bodenbearbeitungseinrichtung ausgeführt wird, wobei eine Hindernisdetektionseinrichtung Hindernisse in der Umgebung detektiert, wobei das Bodenbearbeitungsgerät mittels einer Steuereinrichtung selbsttätig in der Umgebung navigiert und sich selbst lokalisiert, und wobei eine Detektionseinrichtung Geräteparameter und/oder Umgebungsparameter detektiert, und wobei die Steuereinrichtung anhand der detektieren Parameter einen Fehler des Bodenbearbeitungsgerätes ermittelt, welcher eine Fortbewegung des Bodenbearbeitungsgerätes und/oder eine Bearbeitung einer zu bearbeitenden Fläche durch das Bodenbearbeitungsgerät derart verhindert, dass sich das Bodenbearbeitungsgerät nicht selbsttätig aus der Fehlersituation befreien kann und wobei die Steuereinrichtung die mittels der Detektionseinrichtung detektierten Parameter zum Zwecke einer selbstlernenden Fehlervermeidung in Bezug auf wiederkehrende Muster analysiert, die durch eine wiederholt auftretende Kombination eines Fehlers und mindestens eines zeitlich vorausgehenden Umgebungs- und/oder Geräteparameters gekennzeichnet sind. Die in Bezug auf das Bodenbearbeitungsgerät beschriebenen Merkmale und Vorteile gelten entsprechend auch für das erfindungsgemäße Verfahren.

### Kurze Beschreibung der Zeichnungen

Im Folgenden wird die Erfindung anhand von Ausführungsbeispielen näher erläutert. Es zeigen:
- Fig. 1: ein erfindungsgemäßes Bodenbearbeitungsgerät,
- Fig. 2: eine erste Fehlersituation eines Bodenbearbeitungsgerätes in einer ersten Perspektive,
- Fig. 3: die Fehlersituation gemäß Fig. 2 in einer zweiten Perspektive,
- Fig. 4: eine weitere beispielhafte Fehlersituation,
- Fig. 5: eine weitere beispielhafte Fehlersituation,
- Fig. 6: eine Tabelle mit gespeicherten Referenzmustern und vorgeschlagenen Betriebsänderungen für ein Bodenbearbeitungsgerät.

### Beschreibung der Ausführungsformen

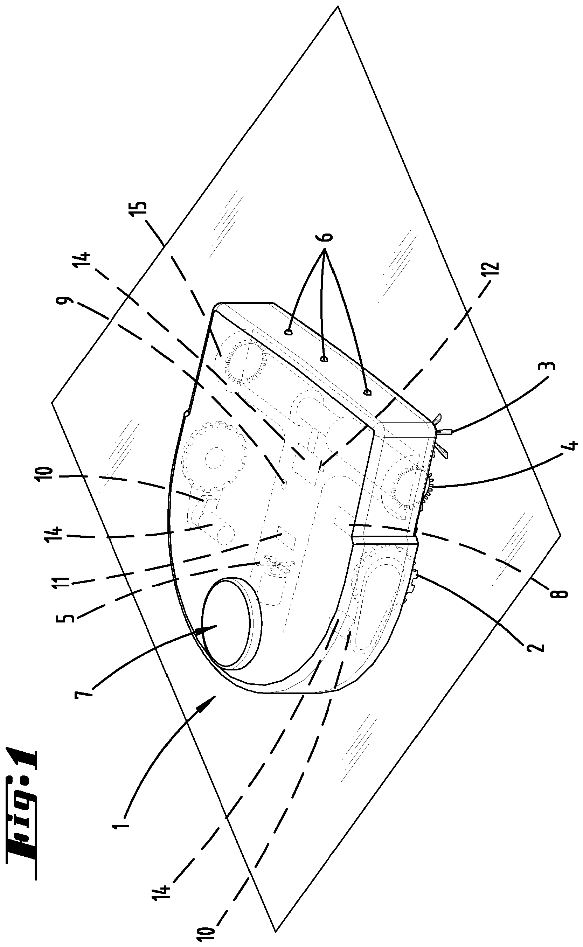

Figur 1 zeigt beispielhaft ein sich selbsttätig innerhalb einer Umgebung fortbewegendes Bodenbearbeitungsgerät 1, welches hier als Saugroboter ausgebildet ist. Das Bodenbearbeitungsgerät 1 verfügt über eine Antriebseinrichtung 2 in Form von zwei jeweils mittels eines Elektromotors 14 angetriebenen Rädern. Jeder Antriebseinrichtung 2 ist eine Detektionseinrichtung 10 in Form einer Odometrie-Messeinrichtung zugeordnet, die eine Anzahl von Umdrehungen der jeweiligen Antriebseinrichtung 2 misst. Daraus kann eine durch das Bodenbearbeitungsgerät 1 zurückgelegte Wegstrecke ermittelt werden. Das Bodenbearbeitungsgerät 1 verfügt des Weiteren über eine Bodenbearbeitungseinrichtung 3 in Form einer um eine vertikale Rotationsachse rotierenden Seitenbürste, die eine Vielzahl von Borstenbüschel aufweist, die über eine Kontur des Bodenbearbeitungsgerätes 1 hinausragen. Des Weiteren verfügt das Bodenbearbeitungsgerät 1 über eine Bodenbearbeitungseinrichtung 4 in Form einer um eine horizontale Rotationsachse rotierenden Borstenwalze, die hier beispielsweise mittig durch einen Elektromotor 14 angetrieben wird. Dem Elektromotor 14 ist eine Detektionseinrichtung 12 zugeordnet, die eine Leistungsaufnahme des Elektromotors 14 detektiert. Die Detektionseinrichtung 12 kann beispielsweise einen Stromfluss zu dem Elektromotor 14 messen, aus welchem dann wiederum bei bekannter Betriebsspannung die Leistungsaufnahme errechnet werden kann. Die Bodenbearbeitungseinrichtung 4 ist einem Saugkanal 15 zugeordnet, welcher sich bis zu einem Gebläse erstreckt, das eine weitere Bodenbearbeitungseinrichtung 5 darstellt. Das Gebläse beaufschlagt den Saugkanal 15 im Bereich der Borstenwalze mit Unterdruck, so dass von einer zu reinigenden Fläche aufgenommenes Sauggut in eine Staubkammer (nicht dargestellt) eingesaugt werden kann.

Das Bodenbearbeitungsgerät 1 verfügt zudem über eine Navigations- und Selbstlokalisierungseinrichtung, welche unter anderem eine Hindernisdetektionseinrichtung 7 umfasst. Die Hindernisdetektionseinrichtung 7 ist hier beispielsweise als eine Laser-Triangulationsmesseinrichtung ausgebildet, welche innerhalb des Bodenbearbeitungsgerätes 1 (hier nicht dargestellt) angeordnet ist und einen Lichtstrahl über reflektierende Elemente nach außen emittiert. Die Hindernisdetektionseinrichtung 7 kann vorzugsweise in einem 360°-Bereich um das Bodenbearbeitungsgerät 1 herum Abstände zu Hindernissen detektieren. Eine Steuereinrichtung 8 erstellt aus den Messwerten beispielsweise eine Umgebungskarte, anhand welcher sich das Bodenbearbeitungsgerät 1 bei einer Reinigungsfahrt orientieren kann. Innerhalb der erstellten Umgebungskarte kann auch die aktuelle Position und Orientierung des Bodenbearbeitungsgerätes 1 ermittelt werden. An einer Außenseite des Bodenbearbeitungsgerätes 1 sind weitere Hindernisdetektionseinrichtungen 6 in Form von hier beispielsweise Ultraschallsensoren angeordnet, welche eine Hinderniserkennung ermöglichen, beispielsweise in einer Ebene, die außerhalb der Messebene der Hindernisdetektionseinrichtung 7 (Triangulationsmesseinrichtung) liegt.

Neben der Detektionseinrichtung 10 zur Durchführung der Odometrie und der Detektionseinrichtung 12 zum Bestimmen einer aktuellen Leistungsaufnahme des Elektromotors 14 der Bodenbearbeitungseinrichtung 4, verfügt das Bodenbearbeitungsgerät 1 zudem über eine in dem Saugkanal 15 angeordnete Detektionseinrichtung 9, welche ausgebildet ist, einen Druck, hier beispielsweise einen Absolutdruck, innerhalb des Saugkanals 15 zu messen. Eine weitere Detektionseinrichtung 11 des Bodenbearbeitungsgerätes 1 verfügt über eine IMU-Einheit (Inertiale Messeinheit), welche ausgebildet ist, eine Schräglage des Bodenbearbeitungsgerätes 1 zu erkennen. Die Detektionseinrichtung 11 beinhaltet eine Kombination mehrerer Inertialsensoren, hier beispielsweise Beschleunigungssensoren.

Die Steuereinrichtung 8 des Bodenbearbeitungsgerätes 1 ist dazu ausgebildet, einen Fehler des Bodenbearbeitungsgerätes 1 zu ermitteln, indem die Detektionsergebnisse einer oder mehrerer Detektionseinrichtungen 9, 10, 11, 12 ausgewertet werden. Ein Fehler des Bodenbearbeitungsgerätes 1 liegt dann vor, wenn eine Fortbewegung des Bodenbearbeitungsgerätes 1 blockiert wird und/oder eine Bearbeitung der zu reinigenden Fläche verhindert wird, ohne dass sich das Bodenbearbeitungsgerät 1 selbsttätig aus der Situation befreien kann. Eine solche Fehlersituation kann beispielsweise vorliegen, wenn sich das Bodenbearbeitungsgerät 1 unter einem überhängenden Hindernis, beispielsweise einem Sofa oder einem Regal, festfährt und sich nicht mehr mittels der Antriebskraft der Antriebseinrichtung 2 befreien kann. Eine weitere Fehlersituation besteht beispielsweise dann, wenn die Antriebseinrichtung 2 des Bodenbearbeitungsgerätes 1 den Kontakt mit der zu reinigenden Fläche verliert und sich somit nicht mehr fortbewegen kann. Dies kann passieren, wenn das Bodenbearbeitungsgerät 1 ein flaches, schmales Hindernis, beispielsweise ein Fußteil eines Schwingstuhls, befährt und mit dem Chassis auf dem Hindernis aufliegt, so dass die Antriebseinrichtungen 2 den Kontakt zu der befahrenen Fläche verlieren. Weitere Fehlersituationen sind denkbar, beispielsweise solche, die eine Bearbeitung der Fläche verhindern, beispielsweise weil eine Bodenbearbeitungseinrichtung 3, 4, 5 blockiert ist. Dies kann beispielsweise passieren, wenn Gegenstände angesaugt werden, die eine Rotation der Bodenbearbeitungseinrichtungen 3, 4 verhindern oder den Saugkanal 14 verstopfen.

Um Fehlersituationen im Vorhinein zu vermeiden, ist das Bodenbearbeitungsgerät 1 bzw. dessen Steuereinrichtung 8 selbstlernend ausgebildet, so dass in der Vergangenheit aufgetretene Fehlersituationen analysiert werden, um Maßnahmen für die Zukunft zu entwickeln, die gleiche oder ähnliche Situationen bei zukünftigen Unternehmungen des Bodenbearbeitungsgerätes 1 verhindern. Dazu analysiert die Steuereinrichtung 8 die mittels der Detektionseinrichtungen 9, 10, 11, 12 detektierten Daten, wenn ein Fehler des Bodenbearbeitungsgerätes 1 festgestellt wird. Dazu werden unmittelbar vor dem Auftreten und/oder zum Zeitpunkt des Auftretens des Fehlers detektierte Umgebungs- und/oder Geräteparameter ausgewertet. Beispielsweise können Daten betreffend einen Zeitraum von wenigen Sekunden vor Auftreten des Fehlers analysiert werden. Insbesondere empfiehlt sich die Analyse von Daten, die zeitlich weniger als eine Minute vor dem Auftreten des Fehlers liegen. Je nach der Art des auftretenden Fehlers können auch kürzere Zeitfenster für die Analyse ausreichend sein, beispielsweise 30 Sekunden, 20 Sekunden oder 10 Sekunden vor Auftreten des Fehlers. Andere Zeitspannen sind ebenfalls möglich. In diesem Zusammenhang kann die Steuereinrichtung 8 auch eingerichtet sein, zunächst die Art des Fehlers zu erkennen und dann in Abhängigkeit von der Art des erkannten Fehlers eine Zeitspanne zu bestimmen, deren zugehörige Daten der Detektionseinrichtungen 9, 10, 11,12 analysiert werden sollen. Wird beispielsweise eine Schräglage des Bodenbearbeitungsgerätes 1 erkannt, genügt die Datenanalyse in einem kürzeren Zeitabstand zu dem Auftreten des Fehlers als beispielsweise bei Auftreten einer Blockade der Antriebseinrichtung 2 oder einer Bodenbearbeitungseinrichtung 3, 4, 5, da es üblicherweise einige Zeit dauern kann, bis sich ein Gegenstand so innerhalb des Saugkanals 15 oder an einer Bodenbearbeitungseinrichtung 3, 4, 5 verfängt, bis eine detektierbare Blockade entsteht.

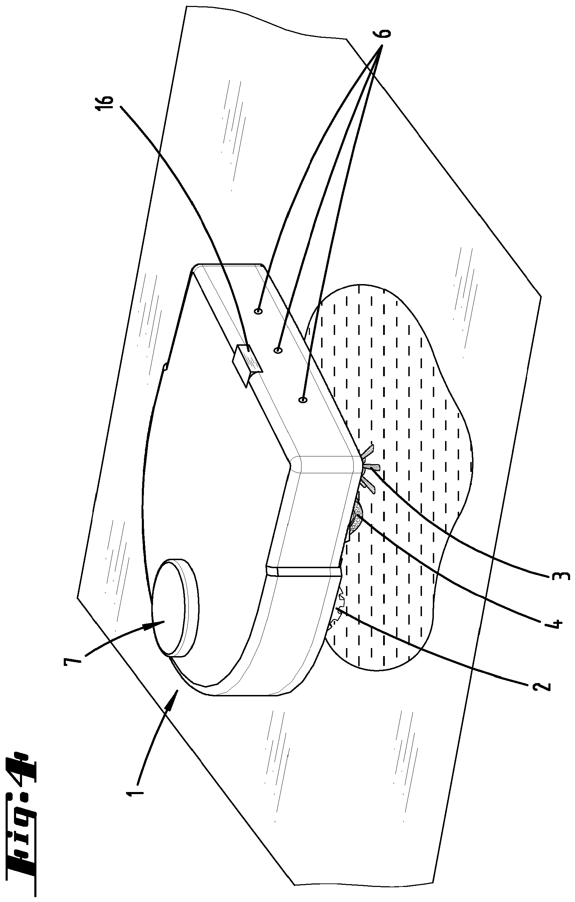

Zum Zwecke eines selbstlernenden Verhaltens des Bodenbearbeitungsgerätes 1 werden die bisher gespeicherten Daten im Falle einer Fehlersituation des Bodenbearbeitungsgerätes 1 analysiert. Die Speicherung erfolgt bevorzugt in einer Datenbank, welche einerseits die von einer oder mehreren Detektionseinrichtungen 9, 10, 11, 12 des Bodenbearbeitungsgerätes 1 und/oder Detektionseinrichtungen 16 weiterer Bodenbearbeitungsgeräte 1 (siehe beispielsweise Figur 4) detektierten Parameter enthält und andererseits eine Information über die Art eines aufgetretenen Fehlers. Darüber hinaus können weitere Informationen gespeichert werden, wie beispielsweise ein Zeitpunkt zu welchem der Fehler aufgetreten ist und/oder der Ort, an welchem sich das Bodenbearbeitungsgerät 1 vor oder zum Zeitpunkt des Auftretens des Fehlers befunden hat. Darüber hinaus kann gegebenenfalls auch eine zuvor von dem Bodenbearbeitungsgerät 1 verfolgte Route gespeichert werden. Jedem in der Datenbank gespeicherten Fehler kann eine vorgeschlagene Betriebsänderung zugeordnet sein, welche angibt, wie ein nochmaliges Auftreten der gleichen Fehlersituation verhindert werden kann. Somit enthält die Datenbank eine Anleitung dahingehend, was unternommen werden kann, damit der gespeicherte Fehler gar nicht erst auftritt.

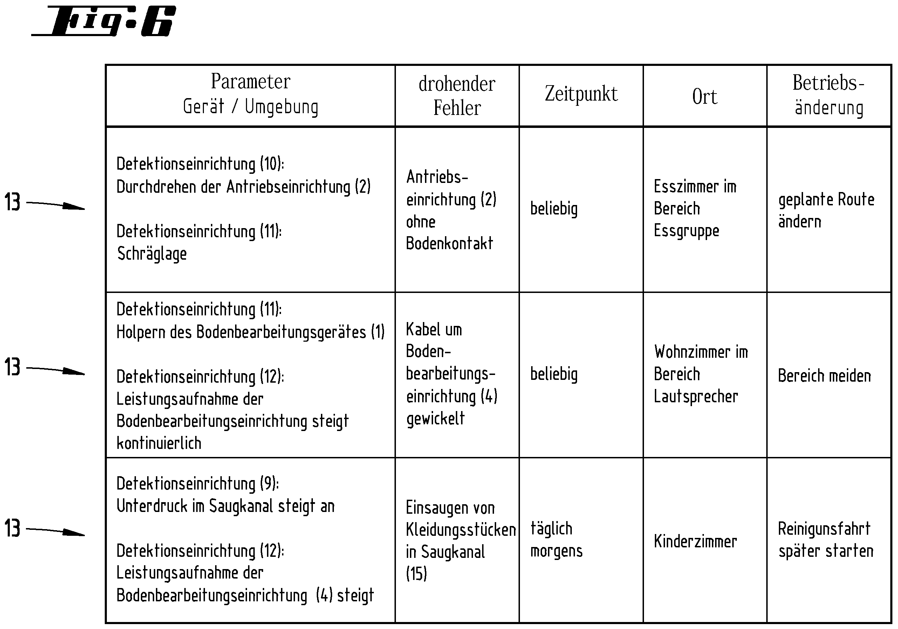

Für eine bestimmte Fehlersituation des Bodenbearbeitungsgerätes 1 kann die Datenbank ein Muster 13 (siehe Figur 6) enthalten, welches in nachfolgenden Reinigungsfahrten des Bodenbearbeitungsgerätes 1 mit detektierten Geräte- und/oder Umgebungsparametern verglichen werden kann, um ein erneutes Auftreten des betreffenden Fehlers zu verhindern. Insofern ist die Steuereinrichtung 8 eingerichtet, die mittels einer oder mehrerer Detektionseinrichtungen 9, 10, 11, 12, 16 detektierten Daten zum Zwecke einer selbstlernenden Fehlervermeidung in Bezug auf wiederkehrende Muster 13 zu analysieren, die durch eine zeitlich und/oder örtlich wiederholt auftretende Kombination eines Fehlers und mindestens eines Geräte- und/oder Umgebungsparameters gekennzeichnet sind. Die Steuereinrichtung 8 kann eine Mindestanzahl des Auftretens eines bestimmten Fehlers definieren, bei deren Überschreitung ein Referenzmuster 13 gespeichert wird, welches zu dem jeweiligen Fehler die vorausgehenden detektierten Parameter enthält sowie Anweisungen an die Steuereinrichtung 8, welche Betriebsänderungen vorzunehmen sind, um den drohenden Fehler zu verhindern. Beispielsweise kann vorgesehen sein, dass ein Fehler mindestens zweimal aufgetreten sein muss, damit zu diesem ein Referenzmuster 13 gespeichert wird. Sollte ein Fehler hingegen nur einmalig auftreten, wird davon ausgegangen, dass es sich um einen Zufall handelte, der sich in Zukunft nicht wiederholen wird. Es kann vorgesehen sein, dass zu einem Fehler erst dann ein Referenzmuster 13 abgespeichert wird, wenn dieser in der Vergangenheit mindestens zweimal, mindestens dreimal oder noch häufiger detektiert wurde.

Die in den Referenzmustern 13 hinterlegten Betriebsänderungen für das Bodenbearbeitungsgerät 1 können empirisch nach einem Versuch- und Irrtum-Verfahren gewonnen sein, d. h. Betriebsänderungen repräsentieren, die das Bodenbearbeitungsgerät 1 bei einem derartigen Fehler in der Vergangenheit durchgeführt hat und die sich als zur Vermeidung des Fehlers erfolgreich herausgestellt haben.

Betriebsänderungen, die zur Vermeidung drohender Fehler eingesetzt werden können, sind beispielsweise das Meiden eines bestimmten Bereiches einer Umgebung des Bodenbearbeitungsgerätes 1, ein zeitliches Hinauszögern eines Befahrens eines bestimmten Bereiches der Umgebung durch das Bodenbearbeitungsgerät 1, eine Rückwärtsfahrt entlang einer bisher gefahrenen Fortbewegungsroute zu dem aktuellen Standort des Bodenbearbeitungsgerätes 1, das Ändern einer geplanten Fortbewegungsroute, das Stoppen einer angetriebenen Bodenbearbeitungseinrichtung 3, 4, 5, das Ändern einer Antriebsrichtung oder Leistungsaufnahme einer Bodenbearbeitungseinrichtung 3, 4, 5. Andere Betriebsänderungen sind ebenfalls möglich. Auch Kombinationen von Betriebsänderungen können zur Behebung eines Fehlers geeignet und definiert sein.

Zu den von den Detektionseinrichtungen 9, 10, 11, 12 des Bodenbearbeitungsgerätes 1 oder von weiteren Detektionseinrichtungen 16 anderer Bodenbearbeitungsgeräte 1 detektierten Geräte- und/oder Umgebungsparametern können unter anderem folgende gehören: eine aktuelle Fortbewegungsroute, entlang welcher sich das Bodenbearbeitungsgerät 1 derzeit bewegt; eine Einstellung und/oder ein Betriebsstatus einer Bodenbearbeitungseinrichtung 3, 4, 5, d. h. beispielsweise eine Drehzahl der Antriebseinrichtung 2 oder einer Bodenbearbeitungseinrichtung 3, 4, 5; ein An-/ Aus-Status; eine Leistungsaufnahme eines der Bodenbearbeitungseinrichtung 3, 4, 5 zugeordneten Elektromotors 14; ein Status oder eine Einstellung der Hindernisdetektionseinrichtung 6, 7; eine räumliche Orientierung des Bodenbearbeitungsgerätes 1 in der Umgebung; eine Beschleunigung oder Verkippung des Bodenbearbeitungsgerätes 1; eine Umgebungstemperatur oder Gerätetemperatur; eine Umgebungsfeuchtigkeit; eine Betriebstemperatur eines Elektromotors 14 des Bodenbearbeitungsgerätes 1 und/oder einer Bodenbearbeitungseinrichtung 3, 4, 5; ein absoluter oder relativer Druck innerhalb des Saugkanals 15 des Bodenbearbeitungsgerätes 1 und/oder ein Umgebungsdruck. Diese Auflistung ist nicht als abschließend zu verstehen.

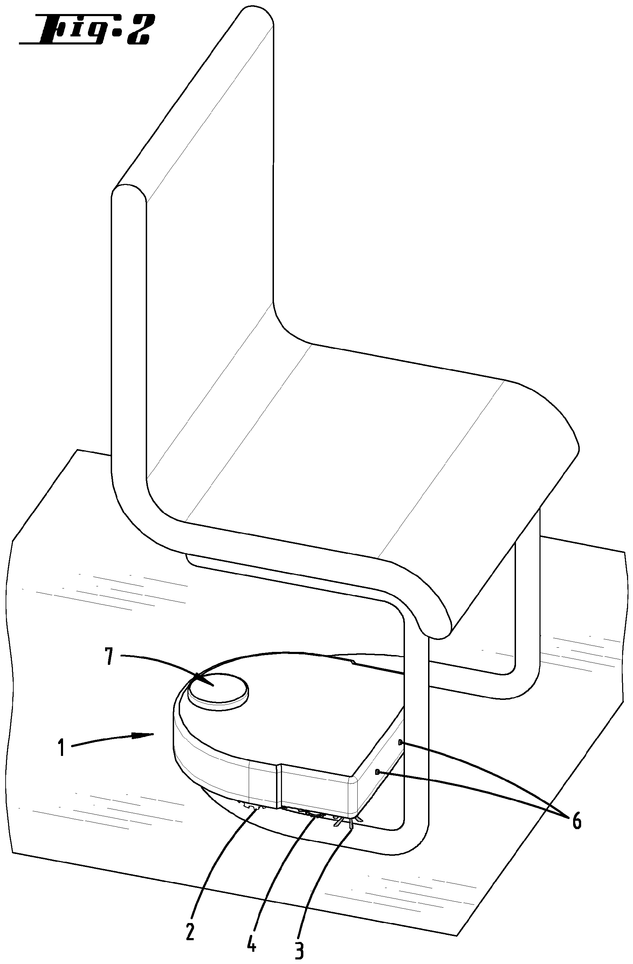

Die Figuren 2 bis 5 zeigen unterschiedliche Fehlersituationen von Bodenbearbeitungsgeräten 1.

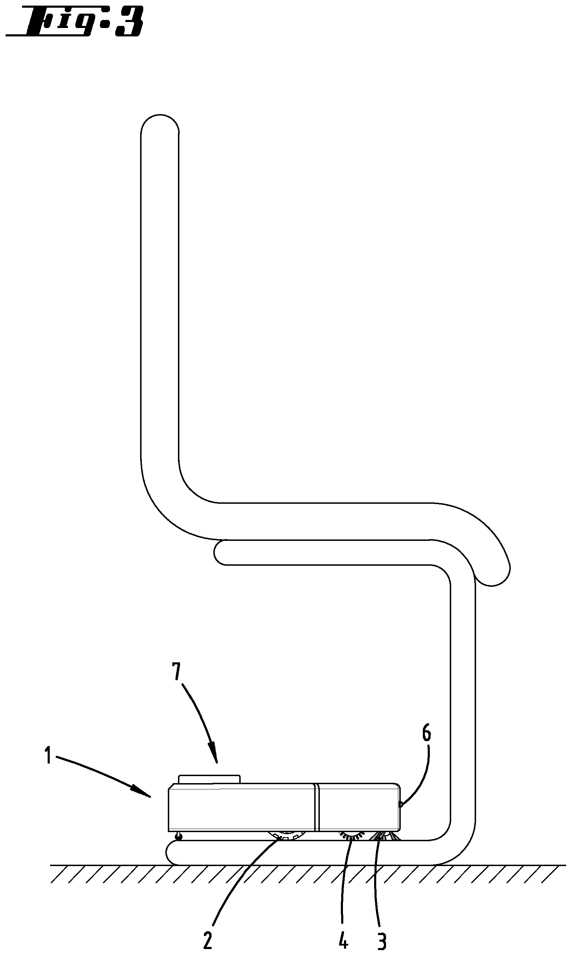

In den Figuren 2 und 3 sitzt das Bodenbearbeitungsgerät 1 gemäß Figur 1 auf einem Bodenrahmen eines Schwingstuhls auf, so dass eine Fortbewegung verhindert ist, weil sich das Bodenbearbeitungsgerät 1 nicht mit eigenen Maßnahmen aus der Fehlersituation befreien kann. Vielmehr ist es erforderlich, dass ein Nutzer das Bodenbearbeitungsgerät 1 aus der Situation befreit und dessen Antriebseinrichtungen 2 wieder in Kontakt mit der Bodenfläche bringt, auf welcher das Bodenbearbeitungsgerät 1 weiter verfahren kann. Es versteht sich von selbst, dass derartige Fehlersituationen des Bodenbearbeitungsgerätes 1 vermieden werden sollen. Daher wird die Situation des Bodenbearbeitungsgerätes 1 vor Auftreten des Fehlers dahingehend analysiert, wie es zu dem Fehler kommen konnte. Für die Analyse dienen die von den Detektionseinrichtungen 9, 10, 11, 12 detektierten Daten, nämlich hier insbesondere die durch die Detektionseinrichtung 10 (Odometriesensor) und die Detektionseinrichtung 11 (IMU-Einrichtung) detektierten Geräteparameter. Zudem wird zur Auswertung eine Information über die aktuelle Position des Bodenbearbeitungsgerätes 1 in der Umgebung herangezogen, welche in einer mittels der Hindernisdetektionseinrichtung 7, nämlich hier der Triangulationsmesseinrichtung, erstellten Umgebungskarte verzeichnet ist. Die Hindernisdetektionseinrichtung 7 ermittelt anhand der Umgebungskarte, dass sich das Bodenbearbeitungsgerät 1 in einem Esszimmer befindet, nämlich im Bereich einer Essgruppe mit mindestens einem Schwingstuhl. Die Detektionseinrichtung 10 detektiert ein Durchdrehen der Antriebseinrichtung 2, welches durch eine Rotation der Antriebseinrichtung 2 ohne gleichzeitige Änderung der Position und/ oder Orientierung des Bodenbearbeitungsgerätes 1 in der Umgebung gekennzeichnet ist. Die Detektionseinrichtung 11 detektiert mittels der darin befindlichen Beschleunigungssensoren, dass sich das Bodenbearbeitungsgerät 1 in einer Schräglage befindet oder in einer Zeitspanne vor Auftreten des Fehlers eine Schräglage erfahren hat. Die Detektionsdaten der Detektionseinrichtungen 10 und 11 werden, sofern sich diese ein weiteres Mal bei einem Betrieb des Bodenbearbeitungsgerätes 1 wiederholen, als Referenzmuster 13 mit dem danach auftretenden Fehler in einer Datenbank hinterlegt, so dass die Steuereinrichtung 8 des Bodenbearbeitungsgerätes 1 bei einem späteren Betrieb des Bodenbearbeitungsgerätes 1 einen Vergleich aktueller Daten der Detektionseinrichtungen 10, 11 mit gespeicherten Referenzmustern 13 vornehmen kann und ebenso eine Betriebsänderung, welche ein erneutes Aufsitzen des Bodenbearbeitungsgerätes 1 auf dem Fußteil des Schwingstuhls verhindert. Ein zu dieser Fehlersituation gehörendes Referenzmuster 13 ist in der obersten Zeile der Tabelle gemäß Figur 6 gespeichert. Das Referenzmuster 13 enthält hier beispielsweise die detektierten Parameter des Bodenbearbeitungsgerätes 1, nämlich die Detektionswerte der Detektionseinrichtung 10 "Durchdrehen der Antriebseinrichtung 2" und die Detektionswerte der Detektionseinrichtung 11 "Schräglage". Des Weiteren enthält das Referenzmuster 13 den zugeordneten Fehler, der bei Auftreten der vorgenannten Parameter droht, nämlich hier das Verlieren des Bodenkontaktes der Antriebseinrichtung 2. Zusätzlich sind die Zeitpunkte gespeichert, zu welchen der Fehler in der Vergangenheit auftrat. Hier handelt es sich um einen zeitlich nicht regelmäßig auftretenden Fehler, so dass der Zeitpunkt ein beliebiger Zeitpunkt sein kann. Das Auftreten des Fehlers ist jedoch ortsabhängig, wobei der Ort des Fehlerauftretens als "Esszimmer im Bereich der Essgruppe" gespeichert ist. Das Referenzmuster 13 enthält eine vorgeschlagene Betriebsänderung, die zur Vermeidung des Fehlers geeignet ist, nämlich hier die Änderung einer geplanten Fortbewegungsroute des Bodenbearbeitungsgerätes 1. Die in dem Referenzmuster 13 hinterlegte Betriebsänderung dient zur Formulierung eines Steuerbefehls für das Bodenbearbeitungsgerät 1 bzw. für die Steuereinrichtung 8.

Figur 4 zeigt eine weitere mögliche Fehlersituation, in welcher ein Bodenbearbeitungsgerät 1 mit seiner Antriebseinrichtung 2 in eine Flüssigkeit fährt. Dies kann dazu führen, dass die Antriebseinrichtung 2 durchdreht. Das Bodenbearbeitungsgerät 1 kann über eine Detektionseinrichtung 16 verfügen, welche beispielsweise eine übermäßige Feuchtigkeit der befahrenen Fläche erkennt. Diese Detektionseinrichtung kann ein Feuchtesensor oder eine Kamera sein, welche mittels einer entsprechenden Bildverarbeitung die Wasseransammlung erkennt. Ebenfalls könnte ergänzend oder alternativ ein Feuchtesensor im Saugkanal 15 des Bodenbearbeitungsgerätes 1 angeordnet sein, welcher ein Ansaugen von Flüssigkeit in den Saugkanal 15 detektiert. Auch zu diesem Fehler kann wiederum ein Referenzmuster 13 angelegt werden, welches den Ort und den Zeitpunkt des Auftretens der Flüssigkeitsansammlung beinhaltet. Beispielsweise ist es möglich, dass der Zeitpunkt regelmäßig auftritt, beispielsweise zu einem regelmäßigen Termin, an welchem an dem zugeordneten Ort befindliche Fenster geputzt oder Pflanzen gegossen werden. Eine vorgeschlagene Betriebsänderung könnte ein Ausschalten des Gebläses (Bodenbearbeitungseinrichtung 5), eine Änderung der Verfahrroute, so dass das Durchfahren der Flüssigkeitsansammlung vermieden wird, oder ähnliches.

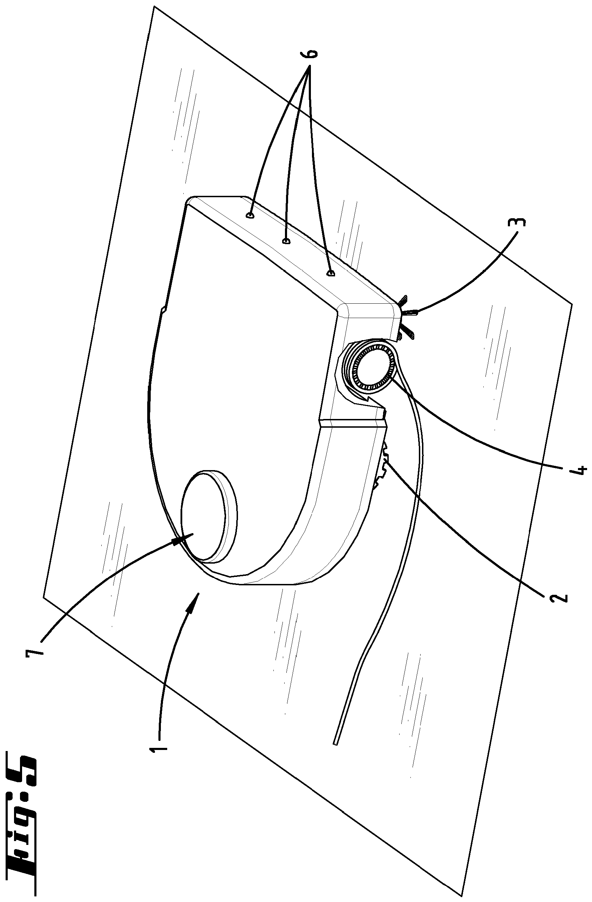

Figur 5 zeigt eine weitere Fehlersituation eines Bodenbearbeitungsgerätes 1, zu welcher in Figur 6 ebenfalls ein Referenzmuster 13 gespeichert ist, nämlich in der zweiten Zeile der Tabelle. Der Fehler betrifft das Aufwickeln eines auf der befahrenen Fläche liegenden Kabels auf die Bodenbearbeitungseinrichtung 4. Dieser Fehler kann einerseits durch die Detektionseinrichtung 11, nämlich hier die IMU-Einrichtung, detektiert werden, und andererseits durch die Detektionseinrichtung 12, welche eine Leistungsaufnahme des die Bodenbearbeitungseinrichtung 4 antreibenden Elektromotors 14 detektiert. In dem Fall, dass die Detektionseinrichtung 11 ein Holpern des Bodenbearbeitungsgerätes 1 detektiert und die Detektionseinrichtung 12 gleichzeitig ein kontinuierliches Ansteigen der Leistungsaufnahme der Bodenbearbeitungseinrichtung 4, kann durch Abgleich mit dem Referenzmuster 13 festgestellt werden, dass der Fehler droht, dass sich ein Kabel um die Bodenbearbeitungseinrichtung 4 wickelt und diese blockiert. Der in dem Referenzmuster 13 hinterlegte Ort kann beispielsweise ein Ort der Umgebung sein, an welchem ein oder mehrere Kabel auf dem Boden liegen, beispielsweise ein Bereich im Wohnzimmer, an welchem sich ein Lautsprecher befindet. Die Betriebsänderung, die zur Formulierung eines Steuerbefehls durch die Steuereinrichtung 8 dient, kann beispielsweise eine Meidung dieses Bereiches angeben, oder aber, sofern das Einwickeln des Kabels schon begonnen hat, ein abwechselndes Vor- und Zurückdrehen der Bodenbearbeitungseinrichtung 4, damit sich das Kabel von der Bodenbearbeitungseinrichtung 4 löst. Des Weiteren kann die Bodenbearbeitungseinrichtung 4 bzw. deren Elektromotor 14 auch ganz abgeschaltet werden, so dass es bei einer Fortbewegung des Bodenbearbeitungsgerätes 1 über die Fläche zu einem selbsttätigen Abfallen des Kabels von der Bodenbearbeitungseinrichtung 4 kommt.

Weitere Fehlersituationen sind denkbar, die sich durch bestimmte Parameter des Bodenbearbeitungsgerätes 1 bzw. dessen Umgebung ankündigen und somit von den Detektionseinrichtungen 9, 10, 11, 12, 16 des Bodenbearbeitungsgerätes 1 gemessen werden können. Figur 6 zeigt in der letzten Zeile der Tabelle eine weitere beispielhafte Situation, welche durch ein Referenzmuster 13 definiert ist. Der Fehler ist dort ein Einsaugen von Gegenständen, beispielsweise Kleidungsstücken, die auf der von dem Bodenbearbeitungsgerät 1 befahrenen Fläche liegen, in den Saugkanal 15 des Bodenbearbeitungsgerätes 1. Das Einsaugen der Kleidungsstücke oder gar die Blockade des Saugkanals 15 kündigt sich durch einen steigenden Unterdruck innerhalb des Saugkanals 15 an, welcher durch die Detektionseinrichtung 9 (Drucksensor) gemessen werden kann. Des Weiteren kann die Leistungsaufnahme des der Bodenbearbeitungseinrichtung 4 zugeordneten Elektromotors 14 steigen, wenn das Kleidungsstück bereits an der Bodenbearbeitungseinrichtung 4 reibt und für die Rotation der Bodenbearbeitungseinrichtung 4 eine erhöhte Leistungsaufnahme erfordert. Das Referenzmuster 13 beinhaltet den Zeitpunkt und den Ort, an welchem dieser Fehler in der Vergangenheit vermehrt aufgetreten ist. Der Ort ist hier ein Kinderzimmer und der Zeitpunkt jeder Tag, morgens. Eine Betriebsänderung zum Vermeiden des Fehlers könnte somit sein, den Ort Kinderzimmer zu dem definierten Zeitpunkt, nämlich täglich morgens, zu meiden.

Alternativ zu einer automatischen Formulierung eines Steuerbefehls durch die Steuereinrichtung 8 betreffend eine automatische Betriebsänderung des Bodenbearbeitungsgerätes 1 kann die in dem Referenzmuster 13 hinterlegte Betriebsänderung auch zur Information eines Nutzers auf einem Display des Bodenbearbeitungsgerätes 1 oder auf einem externen Endgerät, welches mit dem Bodenbearbeitungsgerät 1 in Kommunikationsverbindung steht, angezeigt werden. Der Nutzer wird somit über eine bevorstehende Fehlfunktion des Bodenbearbeitungsgerätes 1 informiert. Somit kann der Nutzer eine entsprechende Betriebsänderung des Bodenbearbeitungsgerätes 1 selbst festlegen, welche vorzugsweise daraufhin in dem betreffenden Referenzmuster 13 abgespeichert wird und bei wiederholter Anbahnung des gleichen Fehlerfalls, d. h. Auftreten identischer oder ähnlicher Detektionswerte der Detektionseinrichtungen 9, 10, 11,12,16, verwendet wird, um den Fehler zu vermeiden. Mögliche Eingaben des Nutzers an dem Bodenbearbeitungsgerät 1 bzw. einem damit in Kommunikationsverbindung stehenden Endgerät können ein manuelles Einlernen einer Anfahrstrategie des Bodenbearbeitungsgerätes 1 über eine Fernbedienung beinhalten. Das Bodenbearbeitungsgerät 1 kann durch den Nutzer über die befahrene Fläche bewegt werden, beispielsweise mittels einer Eingabe auf einem Touchscreen des Endgerätes oder mit Hilfe von Gesten oder Sprache. Der Nutzer kann selbst konkrete Geräteparameter definieren, um den Fehlerfall zu verhindern, nämlich beispielsweise eine Drehrichtung der Antriebseinrichtung 2 oder der Bodenbearbeitungseinrichtung 4. Auch kann dem Nutzer eine Auswahl vordefinierter möglicher Betriebsänderungen angezeigt werden, aus welchen er eine bestimmte Betriebsänderung auswählen kann.

Sofern sich der Fehler trotz einer Betriebsänderung wiederholt, können neu gewonnene Messdaten der Detektionseinrichtungen 9, 10, 11, 12, 16 dazu verwendet werden, das zugehörige Referenzmuster 13 zu ändern oder zu ergänzen, um eine Fehlervorhersage zuverlässiger zu gestalten. Eine Betriebsänderung kann auf der Grundlage unterschiedlicher Reaktionen definiert sein. Beispielsweise kann den vorgeschlagenen Betriebsänderungen ein Trial and Error Verfahren zugrunde liegen, wobei eine gefundene Vermeidungsstrategie für zukünftige, gleichartige Fehlerfälle gespeichert werden kann. Des Weiteren kann ein evolutionäres Trial and Error Verfahren vorliegen, bei welchem eine ebensolche Vermeidungsstrategie verfolgt wird, allerdings unter der Maßgabe, dass eine Reaktion aus einem vorhergehenden Arbeitsbetrieb des Bodenbearbeitungsgerätes 1, die fast zu einer Vermeidung des Fehlers geführt hat, als Grundlage für eine erneute Betriebsänderung genommen wird. Darüber hinaus können auch Erfahrungswerte zur Fehlervermeidung aus einem externen Speicher, beispielsweise einer Cloud, entnommen werden. Alternativ oder zusätzlich kann eine regelbasierte Anpassung der Betriebsparameter erfolgen, die auf Erfahrungswerten aus einer Entwicklungszeit des Bodenbearbeitungsgerätes 1 basiert. Dabei kann eine Regel festlegen, dass beispielsweise nur ein ganz bestimmter Geräteparameter des Bodenbearbeitungsgerätes 1 verändert wird, beispielsweise ein solcher, welcher fehleranfälliger ist als andere Geräteparameter.

Die Betriebsänderungen können des Weiteren so definiert sein, dass ein Fehler dadurch verhindert wird, dass das Bodenbearbeitungsgerät 1 einen Bereich während eines Arbeitsbetriebs gar nicht anfährt oder erst anfährt, wenn andere Bereiche der Umgebung gereinigt wurden. Darüber hinaus kann das Bodenbearbeitungsgerät 1 entsprechend seines bisherigen Verfahrweges zurückverfahren werden. Des Weiteren kann der Verfahrweg verändert werden bis der Fehler nicht mehr auftritt oder eine maximale Anzahl an Wiederholungen überschritten wird, ohne dass der Fehler vermieden wurde.

### Liste der Bezugszeichen

- 1: Bodenbearbeitungsgerät
- 2: Antriebseinrichtung
- 3: Bodenbearbeitungseinrichtung
- 4: Bodenbearbeitungseinrichtung
- 5: Bodenbearbeitungseinrichtung
- 6: Hindernisdetektionseinrichtung
- 7: Hindernisdetektionseinrichtung
- 8: Steuereinrichtung
- 9: Detektionseinrichtung
- 10: Detektionseinrichtung
- 11: Detektionseinrichtung
- 12: Detektionseinrichtung
- 13: Muster
- 14: Elektromotor
- 15: Saugkanal
- 16: Detektionseinrichtung

## Patentansprüche

1. Sich selbsttätig innerhalb einer Umgebung fortbewegendes Bodenbearbeitungsgerät (1) mit einer Antriebseinrichtung (2) zur Fortbewegung des Bodenbearbeitungsgerätes (1) in der Umgebung, einer Bodenbearbeitungseinrichtung (3, 4, 5) zum Ausführen einer Bodenbearbeitung, einer Hindernisdetektionseinrichtung (6, 7) zur Detektion von Hindernissen in der Umgebung, einer Steuereinrichtung (8) zum selbsttätigen Navigieren und Selbstlokalisieren des Bodenbearbeitungsgerätes (1) und einer Detektionseinrichtung (9, 10, 11, 12, 16) zur Detektion von Geräteparametern und/oder Umgebungsparametern, wobei die Steuereinrichtung (8) eingerichtet ist, anhand der detektierten Parameter einen Fehler des Bodenbearbeitungsgerätes (1) zu ermitteln, welcher eine Fortbewegung des Bodenbearbeitungsgerätes (1) und/oder eine Bearbeitung einer zu bearbeitenden Fläche durch das Bodenbearbeitungsgerät (1) derart verhindert, dass sich das Bodenbearbeitungsgerät (1) nicht selbsttätig aus der Fehlersituation befreien kann, **dadurch gekennzeichnet, dass** die Steuereinrichtung (8) eingerichtet ist, die mittels der Detektionseinrichtung (9, 10, 11, 12, 16) detektierten Parameter zum Zwecke einer selbstlernenden Fehlervermeidung in Bezug auf wiederkehrende Muster (13) zu analysieren, die durch eine wiederholt auftretende Kombination eines Fehlers und mindestens eines zeitlich vorausgehenden Umgebungs- und/oder Geräteparameters gekennzeichnet sind.

2. Bodenbearbeitungsgerät (1) nach Anspruch 1, **dadurch gekennzeichnet, dass** die detektierten Fehler und vorausgehenden Umgebungs- und/oder Geräteparameter in Kombination mit einer Information über eine Position des Bodenbearbeitungsgerätes (1) in der Umgebung und/ oder mit einer Zeitinformation detektiert und gespeichert werden.

3. Bodenbearbeitungsgerät (1) nach Anspruch 1 oder 2, **dadurch gekennzeichnet, dass** die Steuereinrichtung (8) eingerichtet ist, die Daten in Hinblick auf wiederkehrende Kombinationen von zeitlich vor und/ oder bei einem Auftreten eines Fehlers aufgenommenen Umgebungs- und/oder Geräteparametern und nachfolgenden Fehlern zu analysieren und bei Erkennen einer wiederkehrenden Kombination diese als Referenzmuster (13) abzuspeichern.

4. Bodenbearbeitungsgerät (1) nach Anspruch 3, **dadurch gekennzeichnet, dass** die Steuereinrichtung (8) eingerichtet ist, während einer nachfolgenden Bodenbearbeitung und/oder Fortbewegung des Bodenbearbeitungsgerätes (1) detektierte Parameter mit gespeicherten Referenzmustern (13) zu vergleichen.

5. Bodenbearbeitungsgerät (1) nach einem der vorhergehenden Ansprüche, **dadurch gekennzeichnet, dass** die Steuereinrichtung (8) derart selbstlernend ausgebildet ist, dass bei Übereinstimmung aktuell detektierter Parameter mit einem Referenzmuster (13) automatisch eine Betriebsänderung des Bodenbearbeitungsgerätes (1) zur Vermeidung eines ansonsten drohenden Fehlers gesteuert wird und/oder eine Ausgabe einer Information über einen drohenden Fehler an einen Nutzer zur Ermöglichung eines manuellen Eingriffs gesteuert wird.

6. Bodenbearbeitungsgerät (1) nach einem der vorhergehenden Ansprüche, **dadurch gekennzeichnet, dass** die Steuereinrichtung (8) eingerichtet ist, eine Kombination aus einem Umgebungs- und/oder Geräteparameter und einem Fehler erst dann als Referenzmuster (13) zu speichern, wenn diese in der Vergangenheit mindestens zwei Mal detektiert wurde.

7. Bodenbearbeitungsgerät (1) nach einem der vorhergehenden Ansprüche, **dadurch gekennzeichnet, dass** die Detektionseinrichtung (9, 10, 11, 12, 16) eingerichtet ist, einen oder mehrere Umgebungs- und/oder Geräteparameter zu detektieren, ausgewählt aus der Gruppe: Fortbewegungsroute des Bodenbearbeitungsgerätes (1), Einstellung und/oder Betriebsstatus einer Bodenbearbeitungseinrichtung (3, 4, 5) und/oder der Hindernisdetektionseinrichtung (6, 7), Leistungsaufnahme eines die Antriebseinrichtung (2) und/oder die Bodenbearbeitungseinrichtung (3, 4, 5) antreibenden Elektromotors (14), Drehwinkel und/ oder Drehgeschwindigkeit der Antriebseinrichtung (2), räumliche Orientierung und/ oder Neigung des Bodenbearbeitungsgerätes (1), Umgebungstemperatur, Umgebungsfeuchtigkeit, Betriebstemperatur eines Elektromotors (14) und/oder einer Bodenbearbeitungseinrichtung (3, 4, 5) des Bodenbearbeitungsgerätes (1), Druck innerhalb eines Saugkanals (15) des Bodenbearbeitungsgerätes (1) und/oder Umgebungsdruck.

8. Bodenbearbeitungsgerät (1) nach einem der vorhergehenden Ansprüche, **dadurch gekennzeichnet, dass** die Steuereinrichtung (8) eingerichtet ist, einen oder mehrere Fehler zu erkennen, ausgewählt aus der Gruppe: Blockieren oder Durchdrehen der Antriebseinrichtung (2) und/ oder Bodenbearbeitungseinrichtung (3, 4, 5), Blockieren eines Saugkanals (15), Abheben eines Teilbereiches des Bodenbearbeitungsgerätes (1) von einer zu bearbeitenden Fläche, Festsetzen des Bodenbearbeitungsgerätes (1) in der Umgebung.

9. Bodenbearbeitungsgerät (1) nach einem der vorhergehenden Ansprüche, **dadurch gekennzeichnet, dass** die Steuereinrichtung (8) eingerichtet ist, eine oder mehrere Betriebsänderungen des Bodenbearbeitungsgerätes (1) zur Vermeidung eines ansonsten drohenden Fehlers zu steuern, ausgewählt aus der Gruppe: Meiden eines bestimmten Bereiches der Umgebung, zeitliches Hinauszögern eines Eintritts in einen bestimmten Bereich der Umgebung, Rückwärtsbewegung entlang einer bisher gefahrenen Fortbewegungsroute, Ändern einer geplanten Fortbewegungsroute, Stoppen einer angetriebenen Bodenbearbeitungseinrichtung (3, 4, 5), Ändern einer Bewegungsrichtung und/oder Leistungsaufnahme einer Bodenbearbeitungseinrichtung (3, 4, 5).

10. Verfahren zum Betrieb eines sich selbsttätig innerhalb einer Umgebung fortbewegenden Bodenbearbeitungsgerätes (1), wobei sich das Bodenbearbeitungsgerät (1) mittels einer Antriebseinrichtung (2) in der Umgebung fortbewegt, wobei eine Bodenbearbeitung mittels einer Bodenbearbeitungseinrichtung (3, 4, 5) ausgeführt wird, wobei eine Hindernisdetektionseinrichtung (6, 7) Hindernisse in der Umgebung detektiert, wobei das Bodenbearbeitungsgerät (1) mittels einer Steuereinrichtung (8) selbsttätig in der Umgebung navigiert und sich selbst lokalisiert, und wobei eine Detektionseinrichtung (9, 10, 11, 12, 16) Geräteparameter und/ oder Umgebungsparameter detektiert, und wobei die Steuereinrichtung (8) anhand der detektieren Parameter einen Fehler des Bodenbearbeitungsgerätes (1) ermittelt, welcher eine Fortbewegung des Bodenbearbeitungsgerätes (1) und/oder eine Bearbeitung einer zu bearbeitenden Fläche durch das Bodenbearbeitungsgerät (1) derart verhindert, dass sich das Bodenbearbeitungsgerät (1) nicht selbsttätig aus der Fehlersituation befreien kann, **dadurch gekennzeichnet, dass** die Steuereinrichtung (8) die mittels der Detektionseinrichtung (9, 10, 11, 12, 16) detektierten Parameter zum Zwecke einer selbstlernenden Fehlervermeidung in Bezug auf wiederkehrende Muster (13) analysiert, die durch eine wiederholt auftretende Kombination eines Fehlers und mindestens eines zeitlich vorausgehenden Umgebungs- und/oder Geräteparameters gekennzeichnet sind.

## Claims

1. A floor processing device (1) that automatically moves within an environment, with a driving attachment (2) for moving the floor processing device (1) in the environment, a floor processing unit (3, 4, 5) for executing a floor processing operation, an obstacle detection unit (6, 7) for detecting obstacles in the environment, a control unit (8) for automatically navigating and self-localizing the floor processing device (1) and a detection unit (9, 10, 11, 12, 16) for detecting device parameters and/or environment parameters, wherein the control unit (8) is set up to determine an error of the floor processing device (1) based upon the detected parameters that prevents the floor processing device (1) from moving and/or the floor processing device (1) from processing a surface to be processed in such a way that the floor processing device (1) is unable to automatically extricate itself from the error situation, **characterized in that**, for purposes of a self-learning error avoidance, the control unit (8) is set up to analyze the parameters detected by means of the detection unit (9, 10, 11, 12, 16) with respect to recurring patterns (13), which are **characterized by** a repeatedly encountered combination of an error and at least one chronologically preceding environment and/or device parameter.

2. The floor processing device (1) according to claim 1, **characterized in that** the detected errors and preceding environment and/or device parameters in combination with information about a position of the floor processing device (1) in the environment and/or with time information are detected and stored.

3. The floor processing device (1) according to claim 1 or 2, **characterized in that** the control unit (8) is set up to analyze the data with regard to recurring combinations of environment and/or device parameters recorded chronologically before and/or during the occurrence of an error and ensuing errors, and upon detection of a recurring combination to store the latter as a reference pattern (13).

4. The floor processing device (1) according to claim 3, **characterized in that** the control unit (8) is set up to compare parameters detected during an ensuing floor processing and/or movement of the floor processing device (1) with stored reference patterns (13).

5. The floor processing device (1) according to one of the preceding claims, **characterized in that** the control unit (8) is self-learning in design, so as to, given a match between currently detected parameters and a reference pattern (13), automatically control a change in operation of the floor processing device (1) to prevent an otherwise imminent error and/or to control an output of information about the imminent error to a user to enable a manual action.

6. The floor processing device (1) according to one of the preceding claims, **characterized in that** the control unit (8) is set up to only store a combination of an environment and/or device parameter and an error as a reference pattern (13) if the latter was detected at least two times in the past.

7. The floor processing device (1) according to one of the preceding claims, **characterized in that** the detection unit (9, 10, 11, 12, 16) is set up to detect one or several environment and/or device parameters, selected from the following group: Movement route of the floor processing device (1), setting and/or operating status of a floor processing unit (3, 4, 5) and/or the obstacle detection unit (6, 7), power consumption of an electric motor (14) that drives the driving attachment (2) and/or floor processing unit (3, 4, 5), rotational angle and/or rotational speed of the driving attachment (2), spatial orientation and/or inclination of the floor processing device (1), ambient temperature, ambient humidity, operating temperature of an electric motor (14) and/or a floor processing unit (3, 4, 5) of the floor processing device (1), pressure within a suction channel (15) of the floor processing device (1) and/or ambient pressure.

8. The floor processing device (1) according to one of the preceding claims, **characterized in that** the control unit (8) is set up to detect one or several errors selected from the following group: Blocking or overrunning of the driving attachment (2) and/or floor processing unit (3, 4, 5), blocking of a suction channel (15), lifting of a partial area of the floor processing device (1) from a surface to be processed, immobilization of the floor processing device (1) in the environment.

9. The floor processing device (1) according to one of the preceding claims, **characterized in that** the control unit (8) is set up to control one or more changes in operation of the floor processing device (1) to prevent an otherwise imminent error, selected from the following group: Avoiding a specific area of the environment, delaying the time of entry into a specific area of the environment, moving in reverse along a previously traversed movement route, changing a planned movement route, stopping a driven floor processing unit (3, 4, 5), changing a direction of movement and/or power consumption of a floor processing unit (3, 4, 5).

10. A method for operating a floor processing device (1) that automatically moves within an environment, wherein the floor processing device (1) moves in the environment by means of a driving attachment (2), wherein a floor processing operation is executed by means of a floor processing unit (3, 4, 5), wherein an obstacle detection unit (6, 7) detects obstacles in the environment, wherein the floor processing device (1) automatically navigates and self-localizes in the environment by means of a control unit (8), wherein a detection unit (9, 10, 11, 12, 16) detects device parameters and/or environment parameters, and wherein the control unit (8) determines an error of the floor processing device (1) based upon the detected parameters that prevents the floor processing device (1) from moving and/or the floor processing device (1) from processing a surface to be processed in such a way that the floor processing device (1) is unable to automatically extricate itself from the error situation, and wherein the control unit (8), for purposes of a self-learning error avoidance, analyzes the parameters detected by means of the detection unit (9, 10, 11, 12, 16) with respect to recurring patterns (13), which are **characterized by** a repeatedly encountered combination of an error and at least one chronologically preceding environment and/or device parameter.

## Revendications

1. Appareil de traitement du sol (1) se déplaçant automatiquement dans un environnement, comprenant un dispositif d'entraînement (2) pour déplacer l'appareil de traitement du sol (1) dans l'environnement, un dispositif de traitement du sol (3, 4, 5) pour effectuer un traitement du sol, un dispositif de détection d'obstacles (6, 7) pour la détection d'obstacles dans l'environnement, un dispositif de commande (8) pour la navigation automatique et l'auto-localisation de l'appareil de traitement du sol (1) et un dispositif de détection (9, 10, 11, 12, 16) pour détecter des paramètres d'appareil et/ou des paramètres d'environnement, dans lequel le dispositif de commande (8) est configuré pour déterminer un défaut de l'appareil de traitement du sol (1) sur la base des paramètres détectés, qui empêche le déplacement de l'appareil de traitement du sol (1) et/ou le traitement d'une surface à traiter par l'appareil de traitement du sol (1) au point que l'appareil de traitement du sol (1) ne peut pas se libérer automatiquement de la situation de défaut, **caractérisé en ce que** le dispositif de commande (8) est conçu pour analyser, dans le but d'éviter des défauts par auto-apprentissage, les paramètres détectés au moyen du dispositif de détection (9, 10, 11, 12, 16) quant à des modèles récurrents (13) qui sont **caractérisés par** une combinaison survenant de manière répétée d'un défaut et d'au moins un paramètre d'environnement et/ou d'appareil qui précède temporellement.

2. Appareil de traitement du sol (1) selon la revendication 1, **caractérisé en ce que** les défauts détectés et les paramètres d'environnement et/ou d'appareil précédents sont détectés et stockés en combinaison avec des informations sur la position de l'appareil de traitement du sol (1) dans l'environnement et/ou avec une information temporelle.

3. Appareil de traitement du sol (1) selon la revendication 1 ou 2, **caractérisé en ce que** le dispositif de commande (8) est conçu pour analyser les données quant à des combinaisons récurrentes de paramètres d'environnement et/ou d'appareil enregistrées temporellement avant et/ou lors de la survenance d'un défaut et de défauts ultérieurs et, lorsqu'une combinaison récurrente est identifiée, pour la stocker comme modèle de référence (13).

4. Appareil de traitement du sol (1) selon la revendication 3, **caractérisé en ce que** le dispositif de commande (8) est conçu pour comparer les paramètres détectés lors du traitement du sol et/ou du déplacement de l'appareil de traitement du sol (1) avec des modèles de référence stockés (13).

5. Appareil de traitement du sol (1) selon l'une des revendications précédentes, **caractérisé en ce que** le dispositif de commande (8) est conçu pour être auto-apprenant de manière à, en cas de correspondance entre des paramètres actuellement détectés et un modèle de référence (13), commander automatiquement une modification du fonctionnement de l'appareil de traitement du sol (1) pour éviter un défaut sinon imminent et/ou commander une sortie d'une information sur un défaut imminent à un utilisateur pour permettre une intervention manuelle.

6. Appareil de traitement du sol (1) selon l'une des revendications précédentes, **caractérisé en ce que** le dispositif de commande (8) est conçu pour stocker une combinaison d'un paramètre d'environnement et/ou d'appareil et un défaut comme modèle de référence (13) seulement si elle a été détectée au moins deux fois dans le passé.

7. Appareil de traitement du sol (1) selon l'une des revendications précédentes, **caractérisé en ce que** le dispositif de détection (9, 10, 11, 12, 16) est conçu pour détecter un ou plusieurs paramètres d'environnement et/ou d'appareil sélectionnés dans le groupe : itinéraire de déplacement de l'appareil de traitement du sol (1), réglage et/ou état de fonctionnement d'un dispositif de traitement du sol (3, 4, 5) et/ou du dispositif de détection d'obstacles (6, 7), puissance absorbée d'un moteur électrique (14) entraînant le dispositif d'entraînement (2) et/ou du dispositif de traitement du sol (3,4,5), angle de braquage et/ou vitesse de rotation du dispositif d'entraînement (2), orientation spatiale et/ou inclinaison de l'appareil de traitement du sol (1), température ambiante, humidité ambiante, température de fonctionnement d'un moteur électrique (14) et/ou d'un dispositif de traitement du sol (3, 4, 5) de l'appareil de traitement du sol (1), pression dans un canal d'aspiration (15) de l'appareil de traitement du sol (1) et/ou pression ambiante.

8. Appareil de traitement du sol (1) selon l'une des revendications précédentes, **caractérisé en ce que** le dispositif de commande (8) est conçu pour identifier un ou plusieurs défauts choisis dans le groupe : blocage ou emballement/patinage du dispositif d'entraînement (2) et/ou du dispositif de traitement du sol (3, 4, 5), blocage d'un canal d'aspiration (15), soulèvement d'une partie de l'appareil de traitement du sol (1) d'une surface à traiter, immobilisation de l'appareil de traitement du sol (1) dans l'environnement.

9. Appareil de traitement du sol (1) selon l'une des revendications précédentes, **caractérisé en ce que** le dispositif de commande (8) est conçu pour commander un ou plusieurs changements de fonctionnement de l'appareil de traitement du sol (1) pour éviter un défaut sinon imminent, choisis dans le groupe : éviter une zone déterminée de l'environnement, retarder l'entrée dans une zone déterminée de l'environnement, reculer le long d'un itinéraire de déplacement emprunté jusqu'à présent, modifier un itinéraire prévu, arrêter un dispositif de traitement du sol entrainé (3, 4, 5), changer une direction de déplacement et/ou la puissance absorbée d'un dispositif de traitement du sol (3, 4, 5).

10. Procédé pour faire fonctionner un appareil de traitement du sol (1) se déplaçant automatiquement dans un environnement, dans lequel l'appareil de traitement du sol (1) se déplace dans l'environnement au moyen d'un dispositif d'entraînement (2), dans lequel le traitement du sol est effectué au moyen d'un dispositif de traitement du sol (3, 4, 5), dans lequel un dispositif de détection d'obstacles (6, 7) détecte des obstacles dans l'environnement, dans lequel l'appareil de traitement du sol (1) navigue automatiquement dans l'environnement au moyen d'un dispositif de commande (8) et se localise lui-même, et dans lequel un dispositif de détection (9, 10, 11, 12, 16) détecte des paramètres d'appareil et/ou des paramètres d'environnement, et dans lequel le dispositif de commande (8) détermine un défaut de l'appareil de traitement du sol (1) sur la base des paramètres détectés, qui empêche un déplacement de l'appareil de traitement du sol (1) et/ou un traitement d'une surface à traiter par l'appareil de traitement du sol (1) au point que l'appareil de traitement du sol (1) ne peut pas se libérer automatiquement de la situation de défaut, **caractérisé en ce que** le dispositif de commande (8) analyse, dans le but d'éviter des défauts par auto-apprentissage, les paramètres détectés au moyen du dispositif de détection (9, 10, 11, 12, 16) quant à des modèles récurrents (13) qui sont **caractérisés par** une combinaison survenant de manière répétée d'un défaut et d'au moins un paramètre d'environnement et/ou d'appareil qui précède temporellement.
